# EUROPÄISCHE PATENTANMELDUNG

(11) **EP 0 765 080 A2**
(43) Veröffentlichungstag der Anmeldung: **26.03.1997**
(21) Anmeldenummer: 96110310.8
(22) Anmeldetag: 26.06.1996
(51) Int. Cl.: H04N 5/45

(54) **Verfahren und Schaltungsanordnung zur Bild-im-Bild-Einblendung**

(30) Priorität: 19.09.1995 DE 19534781
(71) Anmelder: SIEMENS AKTIENGESELLSCHAFT, 80333 München (DE)
(72) Erfinder: Scheffler, Günter, Dipl.-Ing., 80939 München (DE)

(57) **Zusammenfassung**

Bei einem Verfahren zur Bild-im-Bild-Einblendung mit verdoppelter Wiedergabezeilenfrequenz und einer Wiedergaberasterabfolge, bei der das erste und das zweite Zeilenraster jeweils unmittelbar aufeinanderfolgend wiederholt werden (ααββ), sind zur Zwischenspeicherung des einzublendenden Bildes zwei Halbbildspeicher (53, 54) vorgesehen. Zur raster- und bewegungsphasenrichtigen Einblendung dient eine Korrektureinrichtung (63), der die Rasterlage des gerade eingelesenen einzublendenden Bildes, die Wiedergaberasterlage sowie ein Signal, das die relative Lage der Ausleseadresse zur Einleseadresse am jeweiligen Speicher angibt, zugeführt werden. Durch die Korrektureinrichtung (63) wird ein erster Umschalter (57) zur ausgangsseitigen Umschaltung zwischen den Halbbildspeichern (53, 54) und ein zweiter Umschalter zur Einfügung einer Zeilenverzögerung gesteuert.

## Beschreibung

Die Erfindung betrifft ein Verfahren zur Einblendung eines einzublendenden Bildes in ein Hauptbild gemäß den Merkmalen des Oberbegriffs des Patentanspruches 1.

Die Erfindung betrifft außerdem eine Schaltungsanordnung zur Durchführung des Verfahrens.

Ein solches Verfahren bzw. eine derartige Schaltungsanordnung kann in Geräten zur Videosignalverarbeitung, z. B. Fernsehgeräten, angewandt werden, bei denen eine Flimmerbefreiung der am Bildschirm darzustellenden Bilder durch eine Verdoppelung der Wiedergabezeilenfrequenz erreicht wird. Die Bildinformation wird dabei in zeilenverkämmten Rastern dargestellt, von denen jedes Raster zweifach unmittelbar aufeinanderfolgend verwendet wird.

In der europäischen Patentanmeldung EP-A1 0 471 878 sind ein Verfahren und eine Schaltungsanordnung zur Durchführung des Verfahrens zur Bild-im-Bild-Einblendung gezeigt, bei denen zwei Halbbildspeicher für das einzublendende Bild verwendet werden. In jedem der Halbbildspeicher werden Halbbilder nur einer Zeilenrasterlage gespeichert und zur Einblendung in das Hauptbild mit verdoppelter Zeilenfrequenz ausgelesen. Bei beliebigen Phasenlagen von Hauptbild zu einzublendendem Bild kann es vorkommen, daß der Auslesevorgang den Einschreibvorgang am jeweiligen Halbbildspeicher überholt. Im einzublendenden Bild werden dann Bildanteile von zwei aufeinanderfolgenden Bewegungsphasen dargestellt. Die Linie, an der der Bildsprung sichtbar wird, wird als Joint Line bezeichnet. Zur Vermeidung der Joint Line wird eine Entscheidungseinrichtung vorgeschlagen, durch die eine ausgangsseitige Umschaltung zwischen den Halbbildspeichern gesteuert wird. Während des Auslesens aus einem der Halbbildspeicher wird die Stellung des Umschalters nicht verändert, d. h. es wird ein (auf die einzublendende Bildgröße dezimiertes) Halbbild vollständig eingeblendet. Die Stelle des einzublendenden Bildes im Hauptbild ist deshalb an gewisse Einschränkungen gebunden und nicht beliebig wählbar. Außerdem sorgt eine Rasterkorrektureinrichtung für die rasterrichtige Einblendung in das Hauptbildraster. Zur Rasterkorrektur wird eine Interpolation ausgeführt, beispielsweise zwischen Bildpunkten benachbarter Bildzeilen. Dies führt zu einer Verringerung der vertikalen Auflösung.

Die Aufgabe der vorliegende Erfindung besteht darin, diese Nachteile zu vermeiden. Insbesondere soll eine Einblendung möglichst ohne Auflösungsverlust erreicht werden.

Eine weitere Aufgabe besteht in der Angabe einer Schaltungsanordnung zur Durchführung des Verfahrens.

Erfindungsgemäß wird die Aufgabe betreffend das Verfahren durch die Merkmale des Patentanspruches 1 gelöst.

Eine Schaltungsanordnung zur Durchführung des Verfahrens ist in Patentanspruch 5 angegeben.

Beim erfindungsgemäßen Verfahren ist keine Interpolation notwendig. Die Wiedergabereihenfolge der einzublendenden Bildanteile im einzublendenden Bild wird derart festgelegt, daß ein zur Rasterfolge passender Bildinhalt vorliegt. In der zeitlichen Halbbildabfolge des einzublendenden Bildes treten dabei keine Rücksprünge in den dargestellten Bewegungsphasen auf. Die Auslesesteuerung wird in Abhängigkeit von den vier möglichen Zuordnungen der Darstellungsraster des Hauptbildes zu dem Zeilenraster des gerade in den Bildspeicher eingelesenen Halbbildes für das einzublendende Bild durchgeführt, wodurch die Phasenbeziehung zwischen einzublendendem Bild und Hauptbild berücksichtigt wird.

Bei einer ersten Phasenlage, bei der Darstellungsraster und Raster des eingelesenen Halbbildes übereinstimmen, und bei einer vierten Phasenlage, bei der die Rasterbeziehungen genau umgekehrt sind, ist eine joint line-freie Wiedergabe möglich. Im ersteren Fall muß dabei ein einzublendendes Halbbild im anderen Raster dargestellt werden, beispielsweise ein Halbbild B im Raster α. Durch eine Lageverschiebung dieses Halbbildes B wird dafür gesorgt, daß die Reihenfolge der Zeilen im Vollbild korrekt wiedergegeben wird. Die Lageverschiebung kann durch eine Verzögerung des ausgelesenen Halbbildes um eine Zeile erreicht werden. Bei den beiden anderen Phasenbeziehungen bleibt mindestens eine Joint Line bestehen. Es hat sich gezeigt, daß die durch die Joint Line bewirkte Bildstörung von einem Betrachter wesentlich weniger nachteilig empfunden wird als eine Darstellung ohne Joint Line nach dem Stand der Technik, die aber mit einem Bildschärfeverlust aufgrund einer Interpolation erreicht wird. Im allgemeinen Fall können zwei Joint Lines abwechselnd auftreten. Es ist aber möglich, daß nur eine Joint Line auftritt, wahlweise in der unteren Bildhälfte oder in der oberen Bildhälfte. Auch in diesem Fall müssen Lageverschiebungen der Halbbildanteile durchgeführt werden, um für eine korrekte Reihenfolge der Zeilen im Vollbild zu sorgen.

Nachfolgend wird die Erfindung anhand des in den Figuren dargestellten Ausführungsbeispieles näher erläutert. Es zeigen
- Figur 1: ein Zeilenindexdiagramm für das Schreiben und Lesen an den Halbbildspeicher für das einzublendende Bild und
- Figur 2: eine Schaltungsanordnung zur Durchführung des Verfahrens.

Bei dem angegebenen Ausführungsbeispiel wird vorausgesetzt, daß im Gerät für das einzublendende Bild zeilenverkämmte Halbbilder A, B mit einfacher Halbbildfrequenz (50 Hz) und der entsprechenden Zeilenfrequenz empfangen werden. Die Halbbilder A sind jeweils dem ersten Zeilenraster zuordenbar (α-Raster), das die ungeradzahlige Zeilen enthält, und die Halbbilder B sind dem zweiten Zeilenraster zuordenbar (β-Raster), das die geradzahligen Zeilen enthält. Die eingangsseitig eingespeiste Halbbildfolge besteht aus den Halbbildern A0, B0, A1, B1, A2, B2... Im Hauptbild, in das an einer vorgegebenen Stelle das einzublendende Bild mit einer vorgegebenen Größe einzublenden ist, wird die Bildinformation mit doppelter Zeilenfrequenz (bei doppelter Halbbildfrequenz von 100 Hz) wiedergegeben. Dabei wird das erste Zeilenraster sich unmittelbar wiederholend zweimal abgearbeitet, entsprechend das zweite Zeilenraster. Die Rasterfolge für das Hauptbild umfaßt folglich α1α2β1β2.

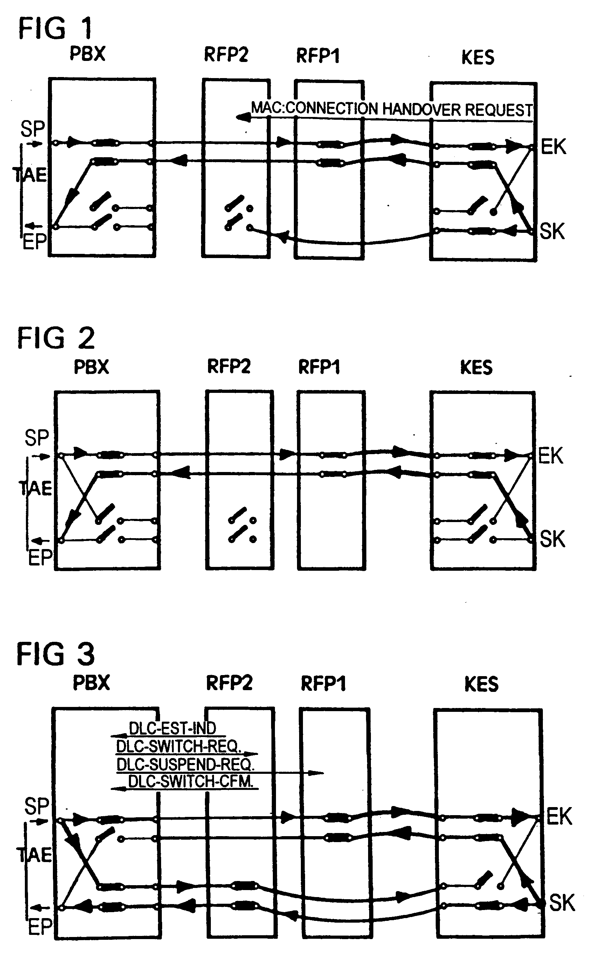

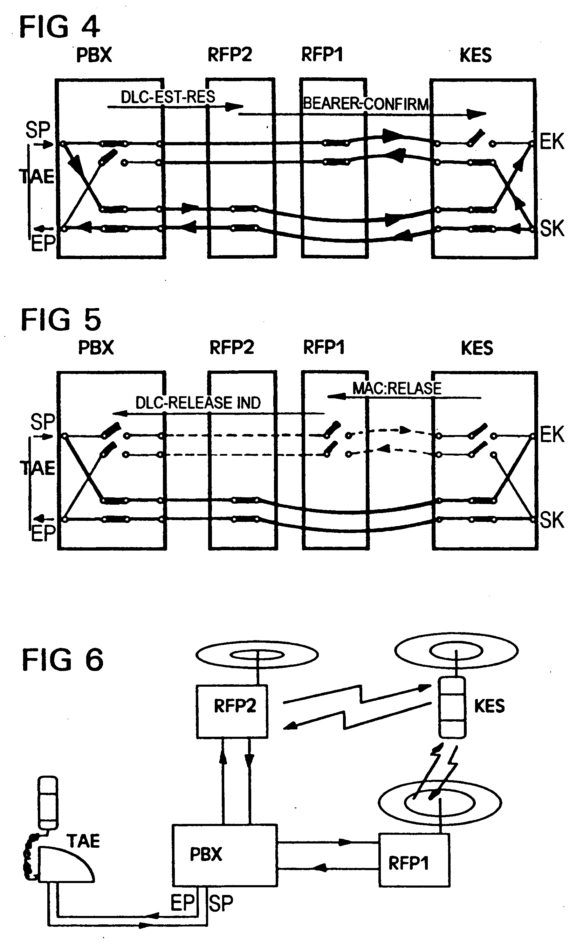

In der Figur 1 sind längs des Zeitstrahls 100 die im ersten Halbbildspeicher gespeicherten Bilder abgetragen, längs des Zeitstrahles 101 die im zweiten Halbbild gespeicherten Bilder. Im ersten Halbbildspeicher werden die Halbbilder A0, A1, ... gespeichert, im zweiten Halbbildspeicher die Halbbilder B0, B1, ... Längs des Zeitstrahles 102 ist die Abfolge der Darstellungsraster für das Hauptbild gezeigt. Dabei sind die vier möglichen Phasenlagen 0, 1, 2, 3 angegeben. Längs der jeweiligen Abszissenachse werden die Speicheradressen, denen jeweils Zeilen des eingelesenen oder ausgelesenen Bildes zuordenbar sind, abgetragen. Der Zeiger 12 stellt das Einschreiben des Halbbildes A1 in den ersten Speicher mit 50 Hz dar, wobei vorausgesetzt wird, daß vorher das Halbbild A0 bereits gespeichert war. Der Schreibzeiger 13 stellt das Einschreiben des Halbbildes B1 in den zweiten Speicher dar, der Zeiger 14 das Einschreiben des Halbbildes A2 in den ersten Speicher. Die übrigen Zeiger sind die möglichen Auslesezeiger, die für die dargestellte Phasenlage zwischen einzublendendem Bild und Hauptbild vorliegen. Das Auslesen wird mit verdoppelter Zeilenfrequenz (100 Hz) ausgeführt. Beispielsweise schneidet der Auslesezeiger 15 den Einlesezeiger 13 im Schnittpunkt 16. Dies liegt daran, daß das Einlesen mit niedrigerer Geschwindigkeit erfolgt als das Auslesen. Im zweiten Speicher liegt dann unterhalb des Schnittpunktes 16, d. h. im oberen abgespeicherten Bildbereich für das Halbbild B, die zum Halbbild B1 gehörende Bildinformation vor, oberhalb des Schnittpunktes 16, d. h. im unteren Bildbereich, der zum Halbbild B0 gehörende Bildanteil. Ein entsprechendes Überholen von Einlese- und Auslesezeiger liegt auch in der unteren Bildhälfte, d. h. bei den höherwertige Adressen des Speichers, im Schnittpunkt 17 vor. Dadurch werden Bildbereiche X, Y und Z festgelegt. Entsprechendes gilt für den ersten Halbbildspeicher für die Halbbilder A.

In der nachfolgenden Tabelle ist für jede Phase 0, 1, 2, 3 einzeln dargestellt, welches der in den Halbbildspeichern gespeicherten Halbbilder auszulesen ist. Dies ist dargestellt für jeweils eine Grundfolge des Hauptbildrasters α1α2β1β2 und für jeden der Bereiche X, Y, Z. Dabei ist der in Figur 1 dargestellte Zeitabschnitt zugrundegelegt. Außerdem ist angegeben, welche Stellung jeweils ein Umschalter am Ausgang der Halbbildspeicher einnimmt sowie die Stellung eines weiteren Umschalters, mit dem eine Verzögerung des Bildes um eine Zeile erreicht werden kann, um die richtige Zeilenreihenfolge in dem für den Betrachter sichtbaren Vollbild zu erhalten. Diese Schalter werden im Zusammenhang mit der Figur 2 noch näher beschrieben.

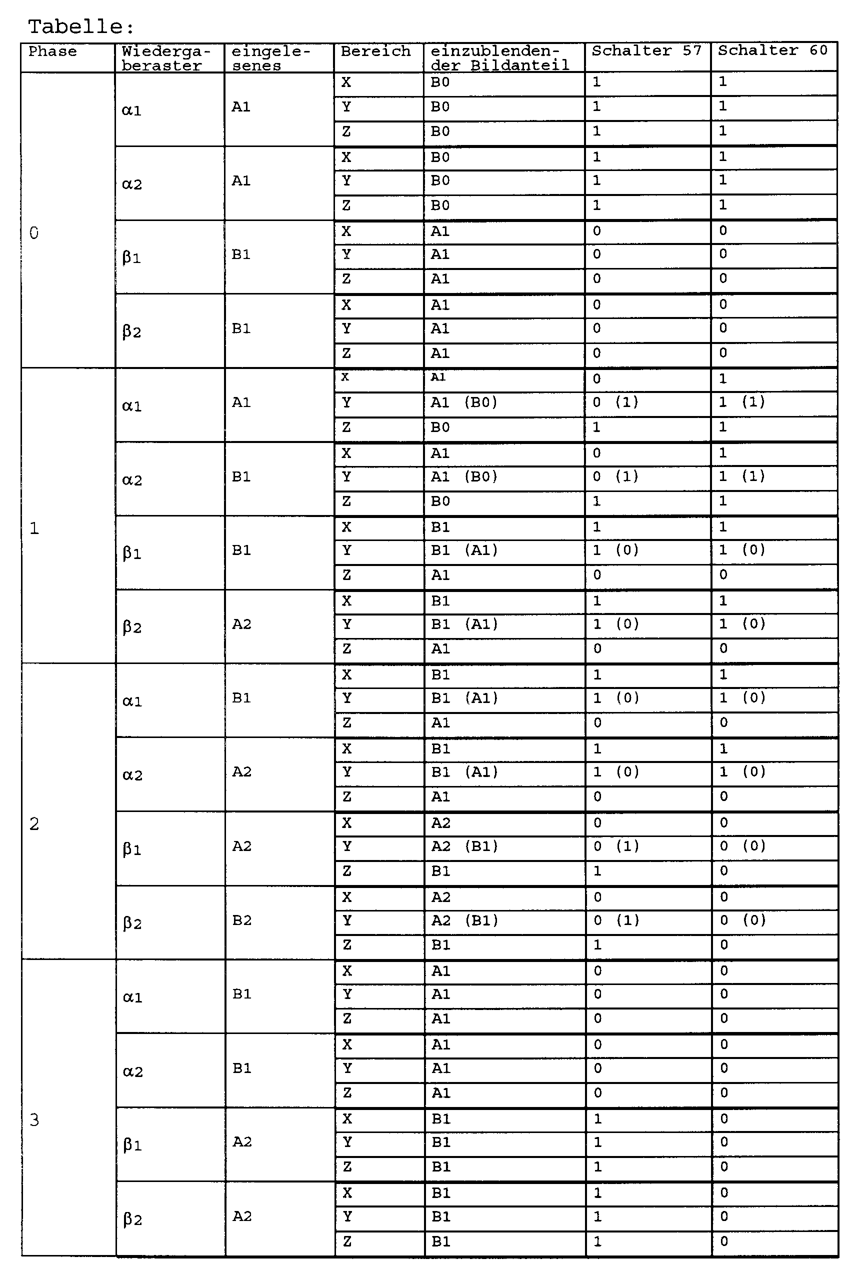

Beispielsweise ist bei der Phase 0, d. h. Wiedergaberaster α1 α2β1β2 fällt mit der Bildfolge A1A1B1B1 zusammen, während des Wiedergaberasters α1 stets aus dem zweiten Halbbildspeicher auszulesen. Während der Bereiche X, Y, Z wird einheitlich das Halbbild B0 aus dem zweiten Halbbildspeicher ausgelesen. Entsprechendes gilt für das Wiedergaberaster α2. Um eine korrekte Wiedergabe der Bewegungsphasen sicherzustellen, wird während des nachfolgenden Wiedergaberasters β1 (und des Wiedergaberasters β2) das Halbbild A1 aus dem ersten Halbbildspeicher ausgelesen. Damit die Reihenfolge der Zeilen in dem für den Betrachter sichtbaren Vollbild korrekt wiedergegeben wird, wird beim Auslesen des Halbbildes B0 während der Wiedergaberaster α1α2 der Bildinhalt des Halbbildes B0 um eine Zeile verzögert, d. h. am Bildschirm um eine Zeile nach unten verschoben. Der Schalter 2, durch den dies eingestellt wird, ist hierzu in seine Schalterstellung "1" zu legen. Hierzu wird eine Bildzeile am Bildanfang zusätzlich gespeichert und dadurch vorgehalten, wobei diese ohne Zwischenschaltung des Zeilenspeichers nicht angezeigt wird, mit Zwischenschaltung des Zeilenspeichers jedoch zur Anzeige gelangt. Prinzipiell könnte die Verschiebung des Bildinhalts um eine Zeile nach unten auch durch eine modifizierte Ausleseadreßsteuerung bei Auslesen des Halbbilds B0 aus dem zweiten Speicher erfolgen.

Während der Phase 3 wird das Halbbild A1 in den Wiedergaberastern α1α2 dargestellt, das Halbbild B1 in den Wiedergaberastern β1β2. Hier liegt bereits die korrekte Zeilenverkämmung vor, so daß der zweite Umschalter nicht aktiviert wird.

Wenn die Phasenlage des Hauptbildrasters zum einzulesenden Bild Phase 1 ist, dann wird während des Darstellungsrasters α 1 im Bereich X das Halbbild A1 aus dem erste Speicherbereich ausgelesen, während des Bereichs Y ein weiterer Anteil des Halbbildes A1 und im Bereich Z der entsprechende Anteil des Halbbildes B0. Um die Bildzeilen reihenfolgerichtig darzustellen, ist in allen drei Bereichen eine Verzögerung um eine Zeile auszuführen. Zwischen dem Bereich X und dem Bereich Z liegt nun eine Joint Line vor. Die auszulesenden Bildanteile während der übrigen Zeilenrasterabschnitte können der Tabelle entnommen werden. Alternativ zu dem gerade beschriebenen Auslesen bei Phase 1 kann auch während des Bereichs X das Halbbild A1 ausgelesen werde, während des Bereichs Y der zeilenrichtige Anteil des Halbbildes B0 und während des Bereichs Z der entsprechende Anteil des Halbbildes B0. Diese Alternative ist in der Tabelle in Klammern angegeben. Hier liegt eine Joint Line zwischen den Bereichen X und Y vor.

Die Schaltungsanordnung zur Durchführung des Verfahrens ist in Figur 2 dargestellt. An einem Anschluß 50 ist ein Videosignal Q1 für das Hauptbild zuführbar. Das Videosignal liegt bereits mit 100 Hz Halbbildfrequenz mit der Rasterabfolge ααβ β vor. An einem Anschluß 51 wird ein Videosignal Q2 für das einzublendende Bild eingespeist, das mit 50 Hz Halbbildfrequenz vorliegt. Entsprechend den Halbbildfrequenzen ist die Zeilenfrequenz des Signals Q1 doppelt so groß wie die Zeilenfrequenz des Signals Q2. In einer Einrichtung 52 werden die eingangsseitigen Bilder des einzublendenden Bildes auf die einzublendende Bildgröße dezimiert. Anschließend werden die Bilder abwechselnd in je einen Halbbildspeicher 53, 54 eingeschrieben. Der erste Halbbildspeicher 53 ist zur Speicherung der Halbbilder A0, A1, ... mit den ungeradzahligen Zeilen vorgesehen, der Halbbildspeicher 54 für die Halbbilder B0, B1, ... mit den geradzahlige Zeilen. Zur Umschaltung zwischen den Halbbildspeichern 53, 54 ist ein Umschalter 55 vorgesehen, der von einer Einrichtung 56 angesteuert wird, die erkennt, welches Halbbild (A oder B) eingangsseitig vorliegt. An der Ausgangsseite der Halbbildspeicher 53, 54 liegt ein erster Umschalter 57, mit dem abwechselnd zwischen dem Ausgang des Halbbildspeichers 53 oder dem Ausgang des Halbbildspeichers 54 umschaltbar ist. Der Ausgang des Umschalters 57 wird über einen Zeilenspeicher 58 und über eine direkte Leitung 59 an einen zweiten Umschalter 60 geführt. Mit dem Umschalter 60 kann wahlweise der Bildinhalt direkt oder um eine Zeile verzögert weitergeleitet werden. Das am Umschalter 60 abgreifbare Ausgangssignal wird zusammen mit dem Signal des Hauptbildes vom Anschluß 50 in einer Einblendeinrichtung 61 am Bildschirm dargestellt. In der Steuerungseinrichtung 62 der Einblendeinrichtung 61 wird ein Schaltsignal erzeugt, das positionsrichtig während der Verarbeitung einer Zeile jeweils zwischen dem Hauptbildkanal vom Anschluß 50 und dem einzublendenden Bildsignal am Anschluß 60 umschaltet.

Die Umschalter 57, 60 werden von einer Korrektureinrichtung 63 angesteuert. Diese erzeugt ein erstes Umschaltsignal für den Schalter 57 und ein zweites Umschaltsignal für den Schalter 60. Der Korrektureinrichtung 63 wird zur Erzeugung der Umschaltsignale eingangsseitig das von der Einrichtung 56 erzeugte Halbbildsignal eingespeist, das angibt, ob ein erstes (A0, A1, ...) oder ein zweites (B0, B1, ...) Halbbild gerade empfangen und in die Speichereinrichtung 53 bzw. 54 eingeschrieben wird. Außerdem wird der Einrichtung 63 ein von einer Rastererkennungseinrichtung 64 erzeugtes Rastersignal eingespeist, das das momentane Wiedergaberaster α1, α2, β1 oder β2 angibt. Darüber hinaus wird in einer Einrichtung 65 ein Bereichssignal erzeugt, das den momentanen Bereich X, Y oder Z angibt. Zur Erzeugung des Bereichssignals wird die Leseadresse R mit der Schreibadresse W an dem jeweils gerade beschriebenen Halbbildspeicher verglichen.

In der Einrichtung 63 ist die oben angegebene Tabelle realisiert. In Abhängigkeit vom Halbbildsignal der Einrichtung 56, dem Rastersignal der Einrichtung 64 und dem Bereichssignal der Einrichtung 65 werden entsprechend der Tabelle die Steuersignale für den Schalter 57 und den Schalter 60 erzeugt. Die Stellung 0 gibt dabei die dargestellte Schalterstellung an, die Schalterstellung 1 bedeutet die andere (nicht dargestellte) Schalterstellung.

Die Phasenlage 0...3 wird innerhalb der Einrichtung 63 durch Abtastung des von der Halbbilderkennungseinrichtung 56 erzeugten Halbbildsignals mit dem von der Rastererkennungseinrichtung 64 erzeugten Rastersignal durchgeführt. Das die Phase 0...3 angebende Signal ist ein 2-Bit-Signal, das aus zwei hintereinander geschalteten Registern erhalten wird, von denen das zweite Register das 2-Bit-Signal abgibt. Das erste Register wird getaktet, wenn das Raster α1 beginnt, das zweite Register, wenn das Raster α2 beginnt. Dem ersten Register wird das von der Einrichtung 56 erzeugte Halbbildsignal zugeführt, dem zweiten Register das Ausgangssignal des ersten Registers als MSB und das von der Einrichtung 56 erzeugte Halbbildsignal als LSB.

## Patentansprüche

1. Verfahren zur Einblendung eines einzublendenden Bildes in ein Hauptbild mit den Merkmalen:
- das einzublendende Bild umfaßt erste und zweite in Zeilen aufgeteilte Halbbilder (A, B) mit Zeilensprung,
- das Hauptbild umfaßt ein erstes und ein zweites Zeilenraster (α, β) für die Darstellung des einzublendenden Bildes mit verdoppelter Zeilenfrequenz,
- das erste und das zweite Zeilenraster (α, β) werden jeweils unmittelbar aufeinanderfolgend wiederholt,
- die ersten und zweiten Halbbilder (A, B) des einzublendenden Bildes werden jeweils in einem ersten bzw. zweiten Halbbildspeicher (53, 54) gespeichert und zur Einblendung daraus mit verdoppelter Zeilenfrequenz ausgelesen,
- zur Einblendung wird unter Auswertung der Phasenlage des Hauptbildes zum einzublendenden Bild wahlweise aus einem der Halbbildspeicher ausgelesen,
**dadurch gekennzeichnet**, daß
- die Phasenlage des Hauptbildes zum einzublendenden Bild ermittelt wird als eine von vier Kombinationen zwischen dem Zeilenraster des gerade in einen der Halbbildspeicher eingelesenen Halbbilds und dem für die Darstellung vorgesehenen Zeilenraster des Hauptbildes ermittelt wird,
- ein Bereichssignal ermittelt wird, durch das die aktuelle Ausleseposition in Abhängigkeit von der Position des Überholens von Einschreiben und Auslesen an einem der Halbbildspeicher angegeben wird,
- bei einer ersten Phasenlage für die Einblendung in das erste Raster aus dem zweiten Halbbildspeicher und zur Einblendung in das zweite Raster aus dem ersten Halbbildspeicher ausgelesen wird und bei einer vierten Phasenlage jeweils aus dem anderen Halbbildspeicher,
- bei einer zweiten Phasenlage für einen ersten Wert des Bereichssignals für die Einblendung in das erste Raster aus dem ersten Halbbildspeicher ausgelesen wird und für die Einblendung in das zweite Raster aus dem zweiten Halbbildspeicher, und für einen zweiten Wert des Bereichssignals jeweils aus dem anderen Halbbildspeicher und bei einer dritten Phasenlage umgekehrt,
- ein Zeilenversatz ausgeführt wird bei der ersten Phasenlage bei der Einblendung in das erste Raster,
- bei der zweiten Phasenlage bei der Einblendung in das erste Raster und bei der Einblendung in das zweite Raster für den ersten Wert des Bereichssignals,
- bei der dritten Phasenlage bei der Einblendung in das erste Raster für den ersten Wert des Bereichssignals.

2. Verfahren nach Anspruch 1,
**dadurch gekennzeichnet**, daß
der Wert des Bereichssignals von seinem ersten auf seinen zweiten Wert umschaltet beim Überholen von Einschreibeadressen (W) und Ausleseadressen (R) an einem der Halbbildspeicher, entweder in der Hälfte der der oberen Bildhälfte zugeordneten Adressen oder in der der unteren Bildhälfte zugeordneten Adressen.

3. Verfahren nach Anspruch 1 oder 2,
**dadurch gekennzeichnet**, daß
ein Zeilenversatz durch eine Verzögerung des jeweils ausgelesenen Halbbilds um eine Zeile ausgeführt wird.

4. Verfahren nach einem der Ansprüche 1 bis 3,
**dadurch gekennzeichnet**, daß
das erste Zeilenraster (α)die ungeradzahligen Zeilen des Hauptbilds umfaßt und das zweite Zeilenraster (β) die geradzahligen Zeilen des Hauptbilds und daß das erste Halbbild (A) des einzublendenden Bildes dessen ungeradzahlige Zeilen und das zweite Halbbild (B) des einzublendenden Bildes dessen geradzahlige Zeilen umfaßt.

5. Schaltungsanordnung zur Durchführung des Verfahrens nach einem der Ansprüche 1 bis 4,
**gekennzeichnet durch**
- einen ersten Speicher (53) zur Speicherung eines ersten Halbbildes (A) des einzublendenden Bildes und einen zweiten Speicher (54) zur Speicherung eines zweiten Halbbilds (B) des einzublendenen Bildes,
- ein Mittel (56) zur Halbbilderkennung, das mit den Speichern eingangsseitig verbunden ist,
- ein Mittel (64) zur Zeilenrastererkennung für das Hauptbild,
- ein Mittel (65) zur Bereichserkennung, durch das das Überholen von Schreib- und Leseadresse (R, W) an einem der Speicher ermittelt wird,
- einen ersten Umschalter (57), der mit den Ausgängen der beiden Speicher verbunden ist,
- einen zweiten Umschalter (60), der eingangsseitig entweder über einen Zeilenspeicher (58) oder direkt mit dem ersten Umschalter verbindbar ist,
- eine Auswerteeinrichtung (63), der eingangsseitig die vom Mittel (56) zur Halbbilderkennung, vom Mittel (64) zur Zeilenrastererkennung und vom Mittel (65) zur Bereichserkennung erzeugten Signale zuführbar sind und durch die in Abhängigkeit von diesen Signalen je ein Umschaltsignal für die Umschalter (67, 60) erzeugt wird,
- Mittel (61) zum Einblenden von aus den Speichern ausgelesenen Bildzeilen in Abschnitte von Bildzeilen des Hauptbildes.
